# EUROPEAN PATENT APPLICATION

(11) **EP 3 961 426 A2**
(43) Date of publication of application: **02.03.2022**
(21) Application number: 21218467.5
(22) Date of filing: 31.12.2021
(51) Int. Cl.: G06F 16/35

(54) **METHOD AND APPARATUS FOR RECOMMENDING DOCUMENT, ELECTRONIC DEVICE AND MEDIUM**

(30) Priority: 28.01.2021 CN 202110122271
(71) Applicant: BEIJING BAIDU NETCOM SCIENCE TECHNOLOGY CO., LTD., No.10 Shangdi 10th Street Haidian District Beijing 100085 (CN)
(72) Inventor: XU, Wei, Beijing, 100085 (CN); XIA, Xiaoling, Beijing, 100085 (CN); HE, Bolei, Beijing, 100085 (CN); CHEN, Kunbin, Beijing, 100085 (CN); LIU, Zhun, Beijing, 100085 (CN); HE, Wei, Beijing, 100085 (CN)
(74) Representative: Carpmaels & Ransford LLP

(57) **Abstract**

The present disclosure provides a method and apparatus of recommending a document, a device, a medium, and a product, relating to fields of intelligent recommendation, deep learning etc. The method of recommending a document includes: acquiring a document operated by a user, as a reference document; determining, from a plurality of initial documents, at least one candidate document for the reference document, wherein a document content of each candidate document is associated with a document content of the reference document, based on preset knowledge system data; and recommending a target document in the at least one candidate document to the user, the target document including a document that the user is currently interested in and a document that the user is interested in after a preset time period.

## Description

### TECHNICAL FIELD

The present disclosure relates to a field of artificial intelligence, in particular to fields of intelligent recommendation, deep learning, etc. More specifically, the present disclosure provides a method and an apparatus for recommending a document, an electronic device, a medium, and a program product.

### BACKGROUND

With a development of network technology, users can acquire various resources through the network. For example, the users can acquire relevant documents from the Internet. In some scenarios, documents required by the users can be recommended to the users according to their requirements, so as to reduce the time it takes for the users to search for documents. However, when the related technology recommends documents for users, it is difficult to accurately know the requirements of users, which makes it difficult for the recommended documents to meet the requirements of users.

### SUMMARY

The present disclosure provides a method of recommending a document, an apparatus for recommending a document, an electronic device, a medium, and a program product.

According to an aspect of the present disclosure, there is provided a method of recommending a document, including: acquiring a document operated by a user, as a reference document; determining, from a plurality of initial documents, at least one candidate document for the reference document, wherein a document content of each candidate document is associated with a document content of the reference document, based on preset knowledge system data; and recommending a target document in the at least one candidate document to the user, the target document including a document that the user is currently interested in and a document that the user is interested in after a preset time period.

According to another aspect of the present disclosure, there is provided an apparatus for recommending a document, including: an acquisition module, a determination module, and a recommendation module. The acquisition module is configured to acquire a document operated by a user, as a reference document; the determination module is configured to determine at least one candidate document for the reference document from a plurality of initial documents, wherein a document content of each candidate document is associated with a document content of the reference document, based on preset knowledge system data; and the recommendation module configured to recommend a target document in the at least one candidate document to the user, the target document including a document that the user is currently interested in, and a document that the user is interested in after a preset time period.

According to another aspect of the present disclosure, there is provided an electronic device, including: at least one processor and a memory communicatively connected with the at least one processor. The memory stores instructions executable by the at least one processor, and the instructions, when executed by the at least one processor cause the at least one processor to implement the above method of recommending a document.

According to another aspect of the present disclosure, there is provided a non-transitory computer-readable storage medium having computer instructions stored thereon, where the computer instructions are configured to cause a computer to implement the above method of recommending a document.

According to another aspect of the present disclosure, there is provided a computer program product including a computer program. The computer program, when executed by a processor, implementing the above method of recommending a document.

It should be understood that content described in this section is not intended to identify key or important features in the embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used to better understand the present disclosure, and do not constitute a limitation to the present disclosure, wherein:
FIG. 1 shows a schematic system architecture of a method and an apparatus for recommending a document according to an embodiment of the present disclosure;
FIG. 2 shows a schematic flowchart of a method of recommending a document according to an embodiment of the present disclosure;
FIG. 3 shows a schematic diagram of preset knowledge system data according to an embodiment of the present disclosure;
FIG. 4 shows a schematic diagram of determining a candidate document according to an embodiment of the present disclosure;
FIG. 5 shows a schematic diagram of determining a candidate document according to another embodiment of the present disclosure;
FIG. 6 shows a schematic diagram of determining a candidate document according to yet another embodiment of the present disclosure;
FIG. 7 shows a schematic diagram of recommending a document according to an embodiment of the present disclosure;
FIG. 8 shows a schematic diagram of a page of recommending a document according to an embodiment of the present disclosure;
FIG. 9 shows a schematic diagram of a page of recommending a document according to another embodiment of the present disclosure;
FIG. 10 shows a schematic block diagram of an apparatus for recommending a document; and
FIG. 11 shows a schematic block diagram of an exemplary electronic device 1100 which can be used for implementing embodiments of the present disclosure.

### DETAILED DESCRIPTION OF EMBODIMENTS

The exemplary embodiments of the present disclosure are described below with reference to the drawings, which include various details of the embodiments of the present disclosure to facilitate understanding, and which should be considered as merely illustrative. Therefore, those ordinary skilled in the art should realize that various changes and modifications may be made to the embodiments described herein without departing from the scope and spirit of the present disclosure. In addition, for clarity and conciseness, descriptions of well-known functions and structures are omitted in the following description.

In the description of the embodiments of the present disclosure, the term "including" and similar terms should be understood as open-ended inclusion, that is, "including but not limited to". The term "based on" should be understood as "at least partially based on." The term "an embodiment," "one embodiment" or "this embodiment" should be understood as "at least one embodiment." The terms "first," "second," and the like may refer to different or the same objects. The following may also include other explicit and implicit definitions.

All terms (including technical and scientific terms) used herein have the meanings commonly understood by those skilled in the art, unless otherwise defined. It should be noted that the terms used here should be interpreted as having meanings consistent with the context of this specification, and should not be interpreted in an idealized or overly rigid manner.

In the case of using an expression similar to "at least one of A, B, C, or the like", generally speaking, it should be interpreted according to the meaning of the expression commonly understood by those skilled in the art (e.g., "a system having at least one of A, B, or C" shall include, but is not limited to, a systems having A alone, having B alone, having C alone, having A and B, having A and C, having B and C, and/or having A, B, and C).

An embodiment of the present disclosure provides a method of recommending a document, including the following steps. A document operated by a user as a reference document is acquired. Then, at least one candidate document for the reference document is determined from a plurality of initial documents, where a document content of each candidate document is associated with a document content of the reference document, based on preset knowledge system data. After that, a target document in the at least one candidate document is recommended to the user, where the target document includes a document that the user is currently interested in and a document that the user is interested in after a preset time period.

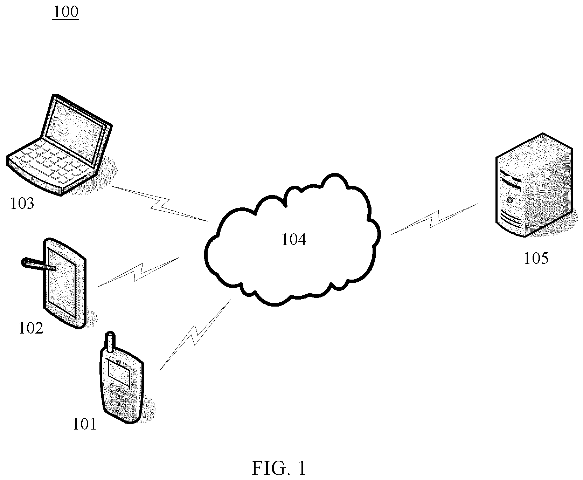

FIG. 1 shows a schematic system architecture of a method and an apparatus for recommending a document according to an embodiment of the present disclosure. It should be noted that FIG. 1 is only an example of the system architecture to which the embodiments of the present disclosure can be applied to help those skilled in the art understand the technical content of the present disclosure, however, it does not mean that the embodiments of the present disclosure cannot be used in other devices, systems, environments, or scenarios.

As shown in FIG. 1, the system architecture 100 according to this embodiment may include terminals 101, 102, and 103, a network 104, and a server 105. The network 104 is used to provide a medium for communication links between the terminals 101, 102, and 103, and the server 105. The network 104 may include various connection types, such as wired or wireless communication links, fiber optic cables, or the like.

The user may use the terminals 101, 102, and 103 to interact with the server 105 through the network 104 to receive or send messages, etc. Various communication terminal applications, such as shopping applications, web browser applications, search applications, instant messaging tools, email terminals, social platform software, etc., may be installed on the terminals 101, 102, and 103 (only examples).

The terminals 101, 102, and 103 may be various electronic devices with display screens and supporting web browsing, including but not limited to smart phones, tablet computers, laptop computers, desktop computers, etc. The terminals 101, 102, and 103 of the embodiments of the present disclosure can, for example, run applications,.

The server 105 may be a server that provides various services, for example, a background management server that provides support for websites that users browse through the terminals 101, 102, and 103 (just an example). The background management server may analyze and process data such as requests received from the users, and feed back processing results (e.g., web pages, information, data, or the like acquired or generated according to the users' requests) to the terminal. In addition, the server 105 may also be a cloud server, that is, the server 105 has a cloud computing function.

It should be noted that the method of recommending a document provided by the embodiments of the present disclosure may be performed by the server 105. Correspondingly, the apparatus for recommending a document provided by the embodiments of the present disclosure may be disposed in the server 105. The method of recommending a document provided by the embodiments of the present disclosure may also be performed by a server or a server cluster that is different from the server 105 and can communicate with the terminals 101, 102, and 103, and/or the server 105. Correspondingly, the apparatus for recommending a document provided by the embodiments of the present disclosure may also be disposed in a server or a server cluster that is different from the server 105 and can communicate with the terminals 101, 102, and 103, and/or the server 105.

In an example, the server 105 stores a plurality of initial documents in advance. A user may operate a document through the terminals 101, 102, and 103. The server 105 may acquire the user's operation records from the terminals 101, 102, and 103 through the network 104, and determine the user's requirements for the document based on the user's operation records. The server 105 acquires a target document required by the user from the stored plurality of initial documents based on the user's requirements, so as to send the target document to the terminals 101, 102, and 103 through the network 104, implementing document recommendation for the user.

It should be understood that the numbers of terminals, networks, and servers in FIG. 1 are merely illustrative. There may be any number of terminals, networks, and servers as desired in practice.

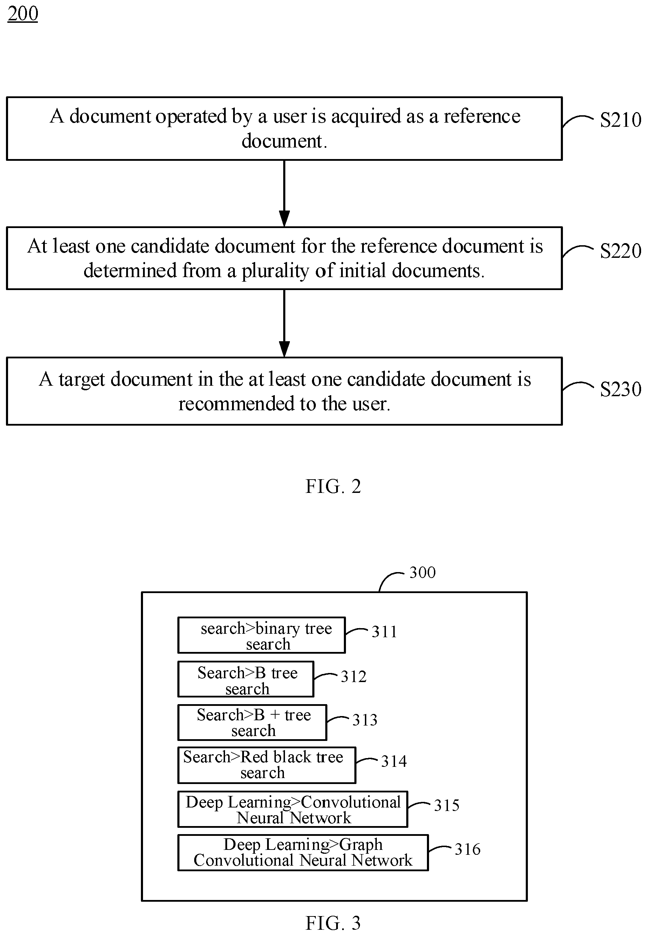

The embodiments of the present disclosure provide a method of recommending a document. The method of recommending a document according to an exemplary embodiment of the present disclosure will be described below with reference to FIGS. 2 to 9, in conjunction with the system architecture of FIG. 1. The method of recommending a document according to the embodiments of the present disclosure may be performed by, for example, the server 105 shown in FIG. 1.

FIG. 2 shows a schematic flowchart of a method of recommending a document according to an embodiment of the present disclosure.

As shown in FIG. 2, the method of recommending a document 200 according to the embodiments of the present disclosure may include, for example, operations S210 to S230.

In operation S210, a document operated by a user is acquired as a reference document.

In operation S220, at least one candidate document for the reference document is determined from the plurality of initial documents.

In operation S230, a target document in the at least one candidate document is recommended to the user, where the target document includes a document that the user is currently interested in and a document that the user is interested in after a preset time period.

In the embodiments of the present disclosure, a document content of each candidate document is associated with a document content of the reference document based on preset knowledge system data.

According to an embodiment of the present disclosure, the document operated by the user includes, for example, a document of a historical operation or a document of a current operation. After the reference document is acquired based on the user's operation, the candidate document for the reference document may be determined from the plurality of pre-stored initial documents. For example, the plurality of initial documents are stored in the server.

In an embodiment of the present disclosure, the preset knowledge system data, for example, represents an association of a plurality of knowledge points. For example, the knowledge system data may characterize a plurality of knowledge points belonging to the same knowledge chapter, and characterize a linkage of a plurality of knowledge points. The linkage, for example, indicates that a current knowledge point is a knowledge point acquired on the basis of a previous knowledge point. When a user intends to learn a plurality of knowledge points, the user usually learns the previous knowledge point and then learns the current knowledge point. In an example, the preset knowledge system data includes, for example, directory data which for example, reflects the association of various knowledge points.

According to an embodiment of the present disclosure, a knowledge point contained in the document content of each candidate document is associated with a knowledge point contained in the document content of the reference document based on preset knowledge system data.

After the at least one candidate document is determined, the determined at least one candidate document may be recommended to the user as the target document. Alternatively, part of the at least one candidate document may be recommended to the user as the target document.

According to the embodiments of the present disclosure, the reference document operated by the user is acquired. Then the candidate document associated with the reference document is determined from the plurality of initial documents based on the preset knowledge system data. Next, the target document in the candidate document is recommended to the user. According to the embodiments of the present disclosure, it is possible to recommend a document that the user is interested in to the user according to the user's operation on the document, improving the accuracy of document recommendation and the variety of recommended documents.

FIG. 3 shows a schematic diagram of preset knowledge system data according to an embodiment of the present disclosure.

As shown in FIG. 3, the preset knowledge system data 300 includes, for example, a plurality of document identifiers 311 to 316. Each of the plurality of document identifiers includes a knowledge chapter information and a knowledge point information of a knowledge point belonging to the knowledge chapter.

Taking the document identifier 311 as an example, the document identifier 311 includes, for example, a knowledge chapter information "search" of a knowledge chapter, and a knowledge point information "binary tree search" of a knowledge point belonging to the knowledge chapter "search". Here, in each document identifier, for example, a knowledge chapter information and a knowledge point information are associated with a symbol ">".

In an embodiment of the present disclosure, the plurality of document identifiers in the preset knowledge system data 300 may be arranged in an order. Taking the document identifier 311 and the document identifier 312 as an example, the document identifier 312 is arranged after the document identifier 311, indicating that a knowledge point "B tree search" indicated by the document identifier 312 is a next knowledge point of the knowledge point "binary tree search" indicated by the document identifier 311. That is, the knowledge point "B tree search" is based on the knowledge point "binary tree search". When a user intends to learn a plurality of knowledge points, the user usually learns the knowledge point "binary tree search" and then the knowledge point "B tree search".

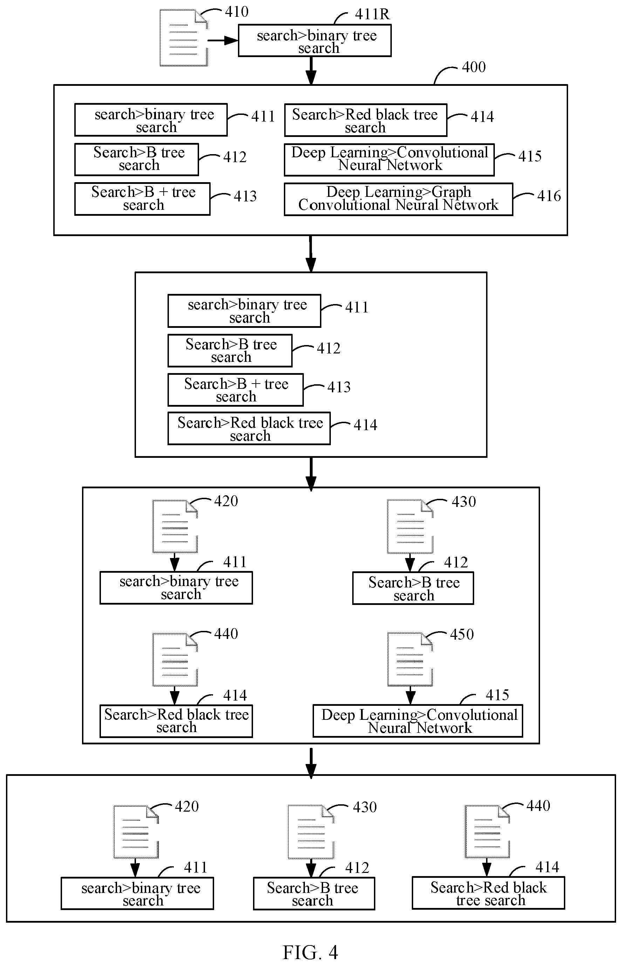

A method of determining the candidate document according to an exemplary embodiment of the present disclosure will be described below with reference to FIGS. 4 to 6, in conjunction with the preset knowledge system data shown in FIG. 3.

FIG. 4 shows a schematic diagram of determining a candidate document according to an embodiment of the present disclosure.

As shown in FIG. 4, a reference document identifier 411R of the reference document 410 is acquired. For example, the reference document identifier 411R may be "search>binary tree search". Afield of "search" is the knowledge chapter information, and a field of "binary tree search" is the knowledge point information.

Next, based on the reference document identifier 411R, at least one candidate document identifier is determined from a plurality of document identifiers 411 to 416 included in preset knowledge system data 400. A knowledge chapter information of each candidate document identifier in the at least one candidate document identifier is the same as a knowledge chapter information of the reference document identifier 411R. For example, the document identifiers 411, 412, 413, and 414 are determined as the candidate document identifiers. The knowledge chapter information of each candidate document is "search", which is the same as the knowledge chapter information "search" of the reference document identifier 411R.

After the at least one candidate document identifier is determined, the candidate document may be determined based on the candidate document identifier. For example, according to the determined at least one candidate document identifier, the candidate document is determined from a plurality of initial documents 420, 430, 440, and 450, which are pre-stored in the server.

Each of the plurality of initial documents 420, 430, 440, and 450 includes an initial document identifier. Taking the initial document 420 as an example, an initial document identifier of the initial document 420 is the document identifier 411, that is, "search>binary tree search". At least one initial document whose initial document identifier is the same as the candidate document identifier is determined from the plurality of initial documents. For example, an initial document identifier of the determined initial document 420 is the document identifier 411, an initial document identifier of the determined initial document 430 is the document identifier 412, and an initial document identifier of the determined initial document 440 is the document identifier 414.The determined initial documents 420, 430, and 440 are used as the at least one candidate document.

Next, a target document in at least one candidate document may be recommended to the user.

In the embodiments of the present disclosure, at least one candidate document identifier whose knowledge chapter information is the same as the knowledge chapter information of the reference document identifier is determined. Then, the initial document with the candidate document identifier is determined as the candidate document from the initial documents. In this way, the candidate documents are enriched by using the initial document with the candidate document identifier as the candidate document in the initial documents. The knowledge point of the determined candidate document and the knowledge point of the reference document belong to the same knowledge chapter. After the user learns the reference document, the candidate document of the same knowledge chapter is recommended to the user, so that the user may continue to learn relevant knowledge systematically, making the recommended document more in line with the user's requirements.

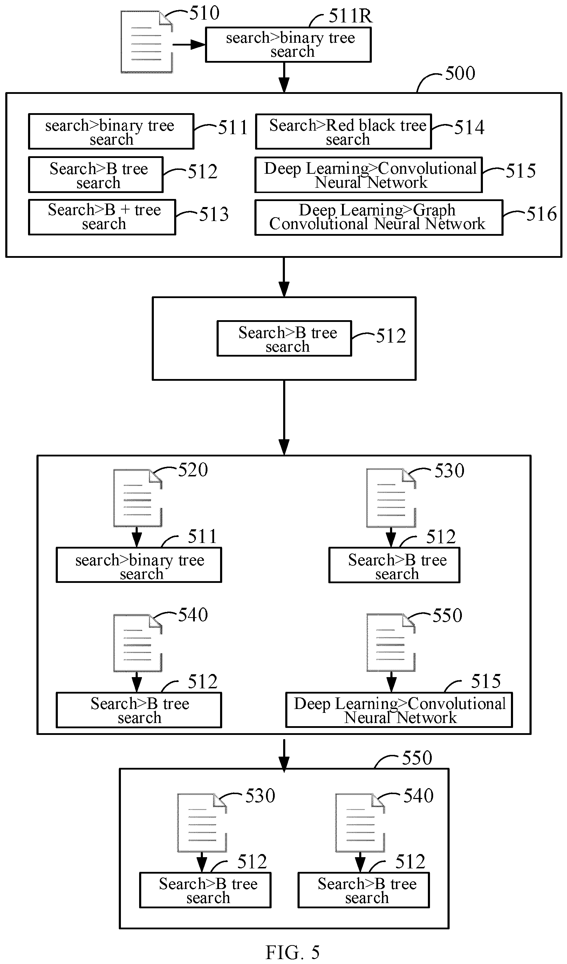

FIG. 5 shows a schematic diagram of determining a candidate document according to another embodiment of the present disclosure.

As shown in FIG. 5, a reference document identifier 511R of the reference document 510 is, for example, "search>binary tree search". Preset knowledge system data 500 includes a plurality of document identifiers 511 to 516, which are arranged in an order. For example, the document identifiers 511 to 516 are arranged in an order of the document identifier 511, the document identifier 512, the document identifier 513, the document identifier 514, the document identifier 515, and the document identifier 516.

In an embodiment of the present disclosure, at least one candidate document identifier is determined from the plurality of document identifiers 511 to 516 based on the reference document identifier 511R. The determined at least one candidate document identifier includes, for example, a candidate document identifier, and the candidate document identifier is, for example, the document identifier 512. In the preset knowledge system data 500, the candidate document identifier is the document identifier 512, and the reference document identifier 511R corresponds to the document identifier 511. Therefore, the determined candidate document identifier (i.e., the document identifier 512) is arranged after the reference document identifier (i.e., the document identifier 511), indicating that the knowledge point "B tree search" represented by the knowledge point information of the candidate document identifier is a next knowledge point of the knowledge point "binary tree search" represented by the knowledge point information of the reference document identifier 511R.

After the candidate document identifier is determined, the candidate document is determined from the plurality of initial documents pre-stored in the server. The plurality of initial documents include, for example, initial documents 520, 530, 540, and 550, where each initial document includes an initial document identifier.

Specifically, at least one initial document whose initial document identifier is the same as the candidate document identifier is determined as the candidate document from the plurality of initial documents. For example, initial document identifiers of the initial document 530 and the initial document 540 are both "search>B tree search", and the initial document identifiers "search>B tree search" are the same as the candidate document identifier. Then, the initial documents 530 and 540 are used as the at least one candidate document. Next, a target document in the at least one candidate document may be recommended to the user.

In the embodiments of the present disclosure, based on the order of the plurality of document identifiers in the preset knowledge system data, the document identifier which is arranged after the reference document identifier is determined as the candidate document identifier. Then, the at least one initial document with the candidate document identifier is determined as the candidate document from the initial documents. It can be seen that the knowledge point of the candidate document is used as the next knowledge point of the reference document to improve pertinence of the candidate document. That is, the determined knowledge point of the candidate document serves as the next knowledge point of the knowledge point of the reference document, so that after the user learns the reference document, the candidate document with the next knowledge point is recommended to the user.

In this way, documents that the user is interested in after a preset time period may be recommended to the user based on the user's current or historical behavior on the document. For example, after reading a certain knowledge point of the document currently, the user may be interested in a next knowledge point with respect to the certain knowledge point within a time period such as a day, a week, or a month, in the future. According to the embodiments of the present disclosure, the document that the user may be interested in in the future may be recommended to the user.

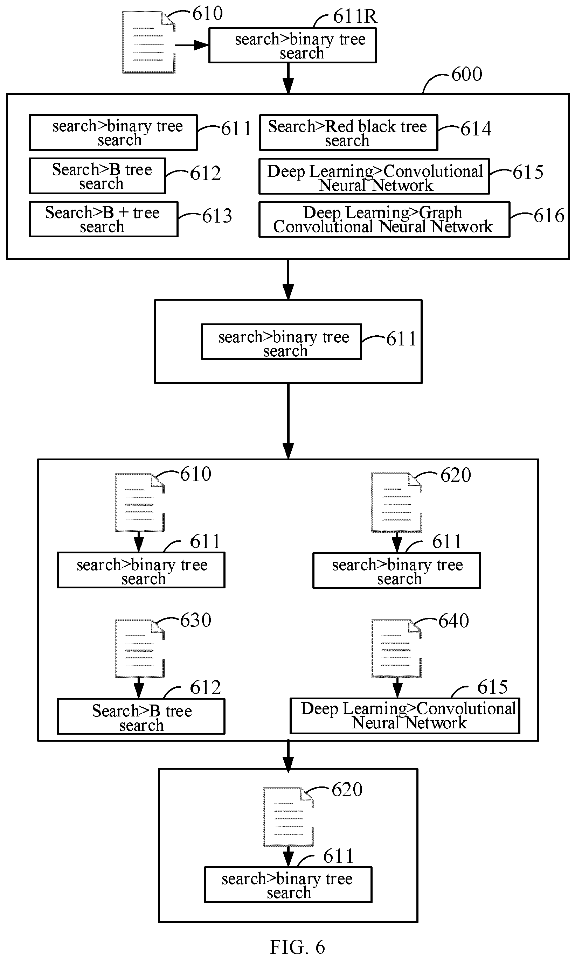

FIG. 6 a schematic diagram of determining a candidate document according to yet another embodiment of the present disclosure.

As shown in FIG. 6, a reference document identifier 611R of a reference document 610 is, for example, "search>binary tree search". Preset knowledge system data 600 includes, for example, a plurality of document identifiers 611 to 616.

In an example, at least one candidate document identifier may be determined from the plurality of document identifiers 611 to 616 based on the reference document identifier 611R. The determined at least one candidate document identifier includes, for example, a candidate document identifier, and the candidate document identifier is, for example, the document identifier 611. Specifically, it is determined from the plurality of document identifiers 611 to 616 whether there is a document identifier that is the same as the reference document identifier 611R, if so, the document identifier that is the same as the reference document identifier 611R is used as the candidate document identifier, for example, the document identifier 611 is used as the candidate document identifier.

In another example, the reference document identifier 611R may also be directly used as the candidate document identifier.

In the embodiments of the present disclosure, the knowledge point "binary tree search" represented by the knowledge point information of the determined candidate document identifier (i.e., the document identifier 611) is the same as the knowledge point "binary tree search" represented by the knowledge point information of the reference document identifier 611R. After the candidate document identifier is determined, the candidate document is determined from a plurality of initial documents pre-stored in the server.

The plurality of initial documents include, for example, an initial document 610 (which is the same as the reference document), an initial document 620, an initial document 630, and an initial document 640. At least one initial document whose initial document identifier is the same as the candidate document identifier (i.e., the initial document 610 and the initial document 620) is determined from the plurality of initial documents. Then, the initial document 620, which is from the determined initial document 610 and the initial document 620 and is other than the initial document 610 that is the same as the reference document, is taken as the at least one candidate document. Next, a target document in the at least one candidate document may be recommended to the user

In the embodiments of the present disclosure, based on the reference document identifier, the candidate document identifier that is the same as the reference document identifier is determined. Then, the initial document with the candidate document identifier is determined as the candidate document from the initial documents, and the target document in the candidate documents is recommended to the user. The recommended target document is a document that has the same knowledge point as the reference document, and that is not learned by the user.

In this way, the document that the user is currently interested in can be recommended to the user based on the user's current or historical browsing behavior on the document, for example, the target document that has the same knowledge point as the reference document, so that the recommended document is more in line with the user's requirements.

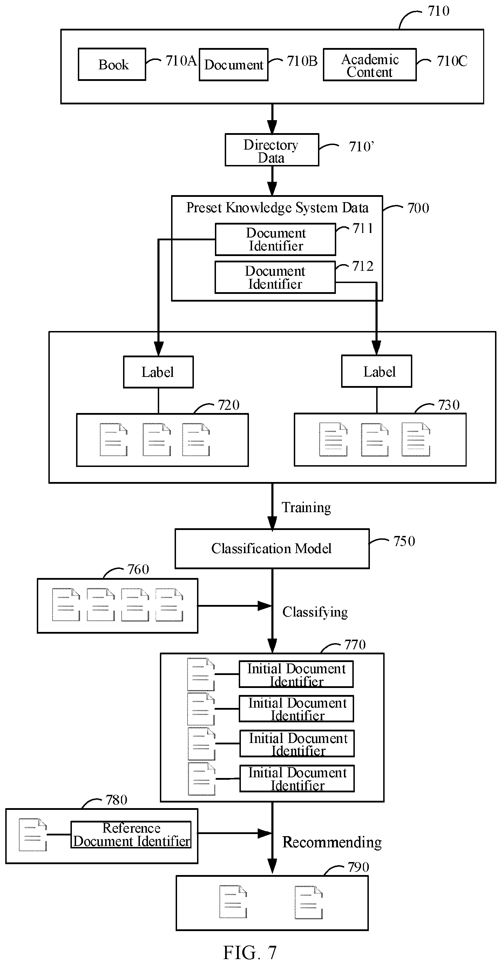

FIG. 7 shows a schematic diagram of recommending a document according to an embodiment of the present disclosure.

As shown in FIG. 7, at least one original material 710 is acquired. The original material is acquired, for example, from a forum or an online shopping mall, or from a search based on a search engine. The at least one original material 710 includes, for example, a book 710A, a document 710B, an academic content 710C, etc. The book 710A includes a paper book or an electronic book. The document 710B includes articles, tutorials, etc. The academic content 710C includes an academic content from a website or a forum.

Next, the at least one original material 710 is processed to acquire directory data 710' of the original material. Specifically, for materials in an HTML format, the materials may be parsed to acquire the directory data through the XML path language, where the XML path language is a language used to search for information in XML documents. For materials in a FDF format, text information may be extracted through a pdfplumber tool, and then the directory data may be acquired from the text information, where pdfplumber is an FDF parsing library developed with python. For materials in a scanned FDF format, an optical character recognition (OCR) tool may be used to acquire the directory data. For paper-based books, the catalog part of the book may be scanned, and then the OCR tool is used to identify the scanned information, so as to acquire the directory data.

In an embodiment of the present disclosure, content information of the knowledge point in the original material may also be stored in the server as the original document, which is convenient for subsequent recommendation to the user.

After the directory data 710' of the original material 710 is acquired, preset knowledge system data 700 may be acquired based on the directory data 710'. For example, a combination of a first-level directory and a second-level directory in the directory data 710' is used as the document identifier. Since knowledge content of a smaller-level directory below the second-level directory is relatively fragmented and incomplete, the embodiments of the present disclosure regard the second-level directory as the smallest-level directory. For example, if the first-level directory is "search" and the second-level directory is "binary tree search", the combination of the first-level directory and the second-level directory is "search>binary tree search", and "search>binary tree search" may be used as the document identifier in the preset knowledge system data 700. It can be seen that through the directory data 710' of the original material 710, the preset knowledge system data 700 with a plurality of document identifiers may be acquired.

Take the preset knowledge system data 700 including the document identifier 711 and the document identifier 712 as an example. Next, training samples for each document identifier are acquired, and a label of the training samples is a document identifier corresponding to the training samples. For example, for the document identifier 711, a set of training samples 720 with the document identifier 711 as the label are acquired, where the set of training samples 720 include a plurality of documents, and a label of each document is the document identifier 711. In the same way, a set of training samples 730 with the document identifier 712 as the label are acquired, and a label of each document is the document identifier 712.

Taking the acquisition of a set of training samples 720 as an example, the document identifier 711 is used as a search phrase to search on a search engine, and an acquired search result includes, for example, a plurality of documents. After the plurality of documents are filtered, the preset number of documents are selected from the filtered documents as the training samples 720, and the preset number is, for example, 800. For example, the document identifier 711 is used as the search phrase which includes two fields, where one field is, for example, a field corresponding to the first-level directory, and the other field is, for example, a field corresponding to a second-level directory. Taking the document identifier 711 of "search>binary tree search" as an example, the search phrase is, for example, a phase of "search binary tree search", the first field is "search", and the second field is "binary tree search". For each document from the search results, if a title or a text of the document contains more than 50% of the words in the second field "binary tree search", the document is retained, otherwise the document is discarded, so that the filtered documents are acquired. Then, the top 800 documents are selected from the filtered documents as the training samples 720.

If the number of filtered documents acquired for the document identifier 711 is less than the preset number of documents, in order to make model training more balanced, the filtered documents may be resampled. For example, if the number of the filtered documents acquired for the document identifier 711 is 500, then 300 documents are selected from the 500 documents, and the 500 documents and the selected 300 documents are used as a set of training samples 720 for the document identifier 711.

After the training samples for each document identifier are acquired, a classification model 750 is trained using the training samples and the label of the training samples. Then, the classification model 750 is used to train the labeled training samples. The classification model may include, for example, a random forest classification model, a decision tree classification model, etc.

In an example, the classification model may be a pre-trained model, and the pre-trained model is, for example, a model trained in advance using a large number of training samples. The embodiments of the present disclosure may use a small number of training samples (e.g., training samples 720 and training samples 730) to further train the model on the basis of the pre-trained model, so as to fine-tune parameters of the pre-trained model. The pre-trained model may be a Multilingual-T5-base model. The Multilingual-T5-base model is an open source pre-trained model produced, which supports multiple languages and is suitable for document recommendation scenarios with a mixture of Chinese and English.

After the classification model 750 is trained with the training samples, the trained classification model 750 may be used to classify a plurality of initial documents 760 stored in the server, and a classification result 770 for each initial document may be acquired. Then, an initial document identifier of each initial document is determined based on the classification result 770, and the initial document identifier of each initial document is the same as the document identifier in the preset knowledge system data 700. The classification result for each initial document includes, for example, a probability of the initial document belonging to a class, and the class is represented by the document identifier in the preset knowledge system data. When the classification result for each initial document indicates that the probability that the initial document belongs to a certain class is greater than a preset probability (e.g., 0.8), the document identifier corresponding to the class is used as the initial document identifier of the initial document.

Next, at least one candidate document is determined from the plurality of initial documents 770 based on a reference document 780, and a target document 790 in the at least one candidate document is recommended to the user.

In the embodiments of the present disclosure, the directory data is acquired from the original materials, and the preset knowledge system data is acquired based on the directory data. Each document identifier in the preset knowledge system data is used as the label of the training samples, and the classification model is trained using the training samples and the label. The initial documents stored in the server are classified based on the trained classification model, so as to acquire the initial document identifier of each initial document. Next, based on the reference document identifier and the initial document identifier, the target document is determined from the initial documents for recommendation, thereby improving the accuracy of document recommendation.

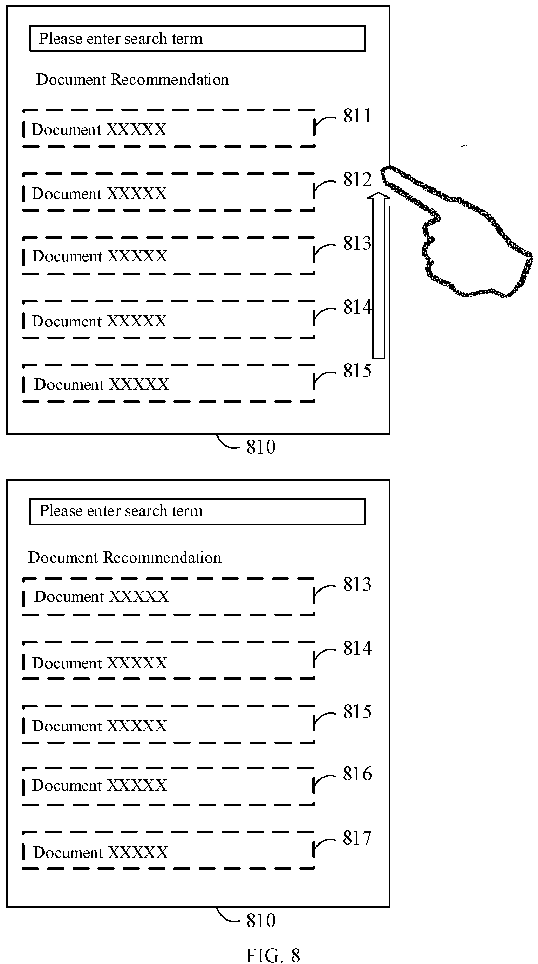

FIG. 8 shows a schematic diagram of a page of recommending a document according to an embodiment of the present disclosure.

In an embodiment of the present disclosure, each user has a user label set. The user label set includes, for example, a knowledge system identifier and other types of labels. The other types of labels include, for example, entertainment, technology, military, politics, society, etc. These labels are, for example, acquired based on the historical behavior of the users when they reading documents. The knowledge system identifier includes, for example, at least one document identifier in the preset knowledge system data. An initial value of the user's knowledge system identifier is empty. When the user performs a click operation or a bookmarking operation on a document within a preset time period in the past, the document identifier of the historical document on which the user performed the operation is added to the knowledge system identifier for the user. The more times the user clicks or bookmarks a certain type of documents, the greater the weight of the document identifier for this type of documents.

When a plurality of document identifiers are included in the knowledge system identifier for each user, the weights of the plurality of document identifiers are normalized. Then, a document identifier with the largest weight is determined from the plurality of document identifiers, and a historical document that the user has operated and corresponds to the document identifier is used as the reference document. Then, a target document is recommended to the user based on the reference document.

As shown in FIG. 8, the terminal displays a related content, for example, through a page 810 in a waterfall flow layout. The displayed content includes, for example, a plurality of documents 811 to 815. For example, a document title of each document is displayed. When a user intends to browse a certain document, the user may click on the document title of the document. Then, the terminal turns to provide a page displaying the content of the document in response to the user's click.

When the user performs a slide operation on the content displayed on the page 810 in the waterfall flow layout, the terminal will send the user's slide operation to the server. In response to the user's slide operation, the server sends the target document in the at least one candidate document to the terminal, so as to implement recommendation of a target document to the user. The Target document includes, for example, a document 816 and a document 817

In an embodiment of the present disclosure, the recommended target document includes, for example, a document that is of the same knowledge section as the reference document. Alternatively, a knowledge point contained in the recommended target document is a next knowledge point with respect to a knowledge point contained in the reference document. Or, the knowledge point contained in the recommended target document and the knowledge point contained in the reference document are the same knowledge point, but the document content of the target document is different from the document content of the reference document. It can be seen that by recommending documents on the page in the waterfall layout, it is possible to recommend documents to users according to the user's sliding operation in a targeted manner.

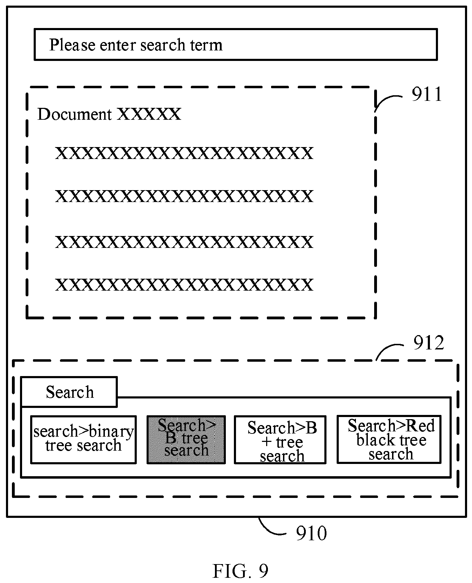

FIG. 9 shows a schematic diagram of a page of recommending a document according to another embodiment of the present disclosure.

As shown in FIG. 9, after the user clicks the document title displayed on a page 910, the terminal displays a document content 911 on the page 910, and the user may browse the document content 911 of the current document displayed on the terminal. Then, the server acquires the current document as a reference document. In response to the user's browsing operation on the document content of the reference document, the server recommends at least one candidate document identifier 912 to the user through the terminal. A knowledge chapter information of the at least one candidate document identifier 912 is, for example, the same as the knowledge chapter information of the reference document identifier, and both are "search". The at least one candidate document identifier 912 includes, for example, "search>binary tree search", "search>B tree search", "search>B + tree search", "search>red-black tree search", etc. When the terminal displays at least one candidate document identifier 912, the knowledge chapter information and the knowledge point information may be split for displaying. For example, only one field "search" is displayed, and the field "binary tree search", the field "B tree search", the field "B+ tree search", and the field "red-black tree search" are respectively displayed.

In the case where the reference document identifier of the reference document is "search>B tree search", for example, the document identifier "search>B tree search" of the at least one candidate document identifier 912 displayed on the terminal is selected. The user may know a knowledge point contained in the current document based on the selected document identifier. When the user selects one candidate document identifier from at least one candidate document identifier 912 as the target document identifier through the terminal, the terminal sends the user's selection instruction to the server. The server recommends the target document to the user in response to the selection instruction. For example, the server may send the target document to the terminal, and the terminal turns to provide a new page to display the target document. In an embodiment, the server may directly recommend the target document with the target document identifier in the at least one candidate document to the user. Alternatively, the server may recommend the target document identifiers to the user in a list, and the user may click on the target document identifier in the list. The terminal sends the user's click instruction to the server, and the server sends the target document to the terminal in response to the user's click, so as to realize the recommendation of the target document to the user. It can be seen that by recommending the plurality of candidate document identifiers to the user, the user may select a corresponding identifier from the plurality of candidate document identifiers according to requirements, which may improve the flexibility of user's selection.

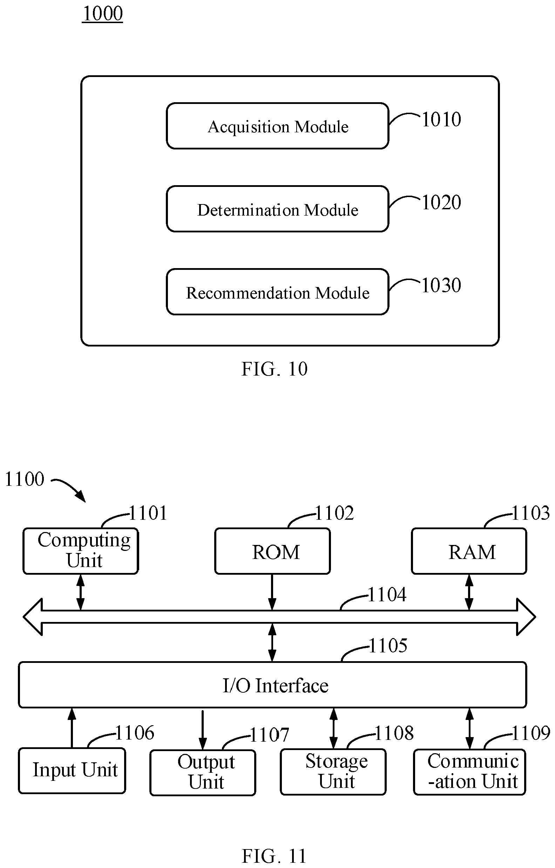

FIG. 10 shows a schematic block diagram of an apparatus for recommending a document.

As shown in FIG. 10, the document recommendation apparatus 1000 according to an embodiment of the present disclosure includes, for example, an acquisition module 1010, a determination module 1020, and a recommendation module 1030.

The acquisition module 1010 may be configured to acquire a document operated by a user as a reference document. According to an embodiment of the present disclosure, the acquisition module 1010 may, for example, perform the operation S210 described above with reference to FIG. 2, which will not be repeated here.

The determination module 1020 may be configured to determine at least one candidate document for the reference document from a plurality of initial documents. According to an embodiment of the present disclosure, the determination module 1020 may, for example, perform the operation S220 described above with reference to FIG. 2, which will not be repeated here.

The recommendation module 1030 may be configured to recommend a target document in at least one candidate document to the user, the target document including a document that the user is currently interested in, and a document that the user may be interested in in the future. According to an embodiment of the present disclosure, the recommendation module 1030 may, for example, perform the operation S230 described above with reference to FIG. 2, which will not be repeated here.

According to an embodiment of the present disclosure, the preset knowledge system data includes a plurality of document identifiers, and each document identifier in the plurality of document identifiers includes a knowledge chapter information. The determination module 1020 includes: an acquisition sub-module, a first determination sub-module, and a second determination sub-module. The acquisition sub-module is configured to acquire a reference document identifier of the reference document. The first determination sub-module is configured to determine at least one candidate document identifier from a plurality of document identifiers based on the reference document identifier, and a knowledge chapter information of each candidate document identifier is the same as a knowledge chapter information of the reference document identifier. The second determination sub-module is configured to determine at least one initial document with the candidate document identifier from a plurality of initial documents as the at least one candidate document.

According to an embodiment of the present disclosure, each document identifier further includes a knowledge point information of a knowledge point belonging to a knowledge chapter, the plurality of document identifiers are arranged in an order, and the at least one candidate document identifier includes one candidate document identifier. A relationship between the candidate document identifier and the reference document identifier meets at least one of: the candidate document identifier is arranged after the reference document identifier, and a knowledge point represented by a knowledge point information of the candidate document identifier is a next knowledge point of a knowledge point represented by a knowledge point information of the reference document identifier; and the knowledge point information of the candidate document identifier is the same as the knowledge point information of the reference document identifier.

According to an embodiment of the present disclosure, the recommendation module 1030 includes a first recommendation sub-module configured to recommend the target document in the at least one candidate document to the user, in response to a slide operation performed by the user for a content displayed on a page in a waterfall flow layout.

According to an embodiment of the present disclosure, the recommendation module 1030 further includes: a second recommendation sub-module and a third recommendation sub-module. The second recommendation sub-module is configured to recommend the at least one candidate document identifier to the user in response to the user's browsing operation on the document content of the reference document. The third recommendation sub-module is configured to recommend the target document having the target document identifier in the at least one candidate document to the user, in response to the target document identifier selected by the user from the at least one candidate document identifier.

According to an embodiment of the present disclosure, the reference document includes at least one of: a historical document on which a click operation or a bookmarking operation is performed by the user within a preset time period; and a document having a document content being currently browsed by the user.

According to an embodiment of the present disclosure, the document recommendation device 1000 further includes: a material acquisition module, a processing module, and a data acquisition module. The material acquisition module is configured to acquire at least one original material. The processing module is configured to process at least one original material to acquire directory data of the original material. The data acquisition module is configured to acquire preset knowledge system data based on the directory data.

According to an embodiment of the present disclosure, the document recommendation apparatus 1000 further includes: a classification module and an identifier determination module. The classification module is configured to classify each of the plurality of initial documents by using a trained classification model, to acquire a classification result for each initial document. The identifier determination module is configured to determine an initial document identifier of each initial document based on the classification result.

According to an embodiment of the present disclosure, the classification model is acquired based on the following method: acquiring training samples for each document identifier, where a label of training samples is a document identifier corresponding to the training samples, and the classification model is trained by using the training samples and the label of the training samples.

Collecting, storing, using, processing, transmitting, providing, and disclosing etc. of the personal information of the user involved in the present disclosure all comply with the relevant laws and regulations, and do not violate the public order and morals.

According to an embodiment of the present disclosure, the present disclosure further provides an electronic device, a readable storage medium, and a computer program product.

FIG. 11 shows a schematic block diagram of an exemplary electronic device 1100 which can be used for implementing embodiments of the present disclosure.

FIG. 11 shows a schematic block diagram of an example electronic device 1100 that can be applied to implement the embodiments of the present disclosure. The electronic device 1100 is intended to represent various forms of digital computers, such as laptop computers, desktop computers, workstations, personal digital assistants, servers, blade servers, mainframe computers, and other suitable computers. Electronic devices may also represent various forms of mobile devices, such as personal digital assistants, cellular phones, smart phones, wearable devices, and other similar computing devices. The components shown herein, their connections and relationships, and their functions are merely examples, and are not intended to limit the implementation of the present disclosure described and/or required herein.

As shown in FIG. 11, the device 1100 includes a computing unit 1101, which may perform various appropriate actions and processing according to a computer program stored in a read only memory (ROM) 1102 or a computer program loaded from a storage unit 1108 into a random access memory (RAM) 1103. In the RAM 1103, various programs and data required for the operation of the device 1100 may also be stored. The computing unit 1101, the ROM 1102, and the RAM 1103 are connected to each other through a bus 1104. An input/output (I/O) interface 1105 is also connected to the bus 1104.

A plurality of components in the device 1100 are connected to an I/O interface 1105, where the components include: an input unit 1106, such as a keyboard, a mouse, etc.; an output unit 1107, such as various types of displays, speakers, etc.; a storage unit 1108, such as magnetic disks, optical disks, etc.; and a communication unit 1109, such as a network card, a modem, a wireless communication transceiver, etc. The communication unit 1109 allows the device 1100 to exchange information/data with other devices through a computer network such as the Internet and/or various telecommunication networks.

The computing unit 1101 may be various general-purpose and/or special-purpose processing components with processing and computing capabilities. Some examples of the computing unit 1101 include, but are not limited to, central processing units (CPUs), graphics processing units (GPUs), various dedicated artificial intelligence (AI) computing chips, various computing units that run machine learning model algorithms, and a digital signal processing (DSP), and any appropriate processor, controller, microcontroller, etc. The calculation unit 1101 executes the various methods and processes described above, such as the document recommendation method. For example, in some embodiments, the document recommendation method may be implemented as a computer software program, which is tangibly contained in a machine-readable medium, such as the storage unit 1108. In some embodiments, part or all of the computer program may be loaded and/or installed on the device 1100 via the ROM 1102 and/or the communication unit 1109. When the computer program is loaded into the RAM 1103 and executed by the computing unit 1101, one or more steps of the document recommendation method described above can be executed. Alternatively, in other embodiments, the computing unit 1101 may be configured to execute the document recommendation method in any other suitable manner (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

Program codes for implementing the method of the present disclosure may be written in any combination of one or more programming languages. These program codes may be provided to a processor or a controller of a general-purpose computer, a special-purpose computer, or other programmable data processing devices, so that when the program codes are executed by the processor or the controller, the functions/operations specified in the flowchart and/or block diagram may be implemented. The program codes may be executed completely on the machine, partly on the machine, partly on the machine and partly on the remote machine as an independent software package, or completely on the remote machine or the server.

In the context of the present disclosure, the machine readable medium may be a tangible medium that may contain or store programs for use by or in combination with an instruction execution system, device or apparatus. The machine readable medium may be a machine-readable signal medium or a machine-readable storage medium. The machine readable medium may include, but not be limited to, electronic, magnetic, optical, electromagnetic, infrared or semiconductor systems, devices or apparatuses, or any suitable combination of the above. More specific examples of the machine readable storage medium may include electrical connections based on one or more wires, portable computer disks, hard disks, random access memory (RAM), read-only memory (ROM), erasable programmable read-only memory (EPROM or flash memory), optical fiber, convenient compact disk read-only memory (CD-ROM), optical storage device, magnetic storage device, or any suitable combination of the above.

In order to provide interaction with users, the systems and techniques described here may be implemented on a computer including a display device (for example, a CRT (cathode ray tube) or LCD (liquid crystal display) monitor) for displaying information to the user), and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a blockchain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method (200) of recommending a document, comprising:
acquiring (S210) a document operated by a user, as a reference document;
determining (S220), from a plurality of initial documents, at least one candidate document for the reference document, wherein a document content of each candidate document is associated with a document content of the reference document, based on preset knowledge system data; and
recommending (S230) a target document in the at least one candidate document to the user, the target document including a document that the user is currently interested in and a document that the user is interested in after a preset time period.

2. The method according to claim 1, wherein the preset knowledge system data (300; 400) comprises a plurality of document identifiers (311, 312, 313, 314, 315, 316; 411, 412, 413, 414, 415, 416) each comprising a knowledge chapter information; and the determining, from a plurality of initial documents, at least one candidate document for the reference document comprises:
acquiring a reference document identifier (411R) of the reference document;
determining, based on the reference document identifier (411R), at least one candidate document identifier (411, 412, 413, 414) from the plurality of document identifiers (411, 412, 413, 414, 415, 416), wherein a knowledge chapter information of each candidate document identifier is the same as a knowledge chapter information of the reference document identifier; and
determining, from the plurality of initial documents (420, 430, 440, 450), at least one initial document (420, 430, 440) having the candidate document identifier as the at least one candidate document.

3. The method according to claim 2, wherein each document identifier further comprises a knowledge point information of a knowledge point belonging to a knowledge chapter, the plurality of document identifiers are arranged in an order, and the at least one candidate document identifier includes one candidate document identifier; a relationship between the candidate document identifier and the reference document identifier meets at least one of:
the candidate document identifier being arranged after the reference document identifier, and a knowledge point represented by a knowledge point information of the candidate document identifier is a next knowledge point of a knowledge point represented by a knowledge point information of the reference document identifier; and
the knowledge point information of the candidate document identifier being the same as the knowledge point information of the reference document identifier.

4. The method according to claim 1, wherein the recommending a target document in the at least one candidate document to the user comprises:
in response to a slide operation performed by the user for a content (811, 812, 813, 814, 815) displayed on a page (810) in a waterfall flow layout, recommending the target document in the at least one candidate document to the user.

5. The method according to claim 2, wherein the recommending a target document in the at least one candidate document to the user comprises:
in response to a browsing operation performed by the user on the document content of the reference document, recommending the at least one candidate document identifier (912) to the user; and
in response to a target document identifier selected by the user from the at least one candidate document identifier, recommending the target document having the target document identifier in the at least one candidate document to the user.

6. The method according to any one of claims 1 to 5, wherein the reference document comprises at least one of:
a historical document on which a click operation or a bookmarking operation is performed by the user within a preset time period; and
a document having a document content being currently browsed by the user.

7. The method according to any one of claims 1 to 5, further comprising:
acquiring at least one original material (710);
processing the at least one original material, to acquire directory data (710') of the original material; and
acquiring the preset knowledge system data (700) based on the directory data (710').

8. The method according to claim 2 or 3, further comprising:
classifying each of the plurality of initial documents (760) using a trained classification model (750), to acquire a classification result for the each of the plurality of initial documents; and
determining an initial document identifier of the each of the plurality of initial documents based on the classification result.

9. The method according to claim 8, wherein the classification model is acquired by:
acquiring a training sample (720, 730) for each of the plurality of document identifiers, wherein a label of the training sample is the document identifier corresponding to the training sample; and
training the classification model (750) using the training sample with the label.

10. An apparatus (1000) for recommending a document, comprising:
an acquisition module (1010) configured to acquire a document operated by a user, as a reference document;
a determination module (1020) configured to determine at least one candidate document for the reference document from a plurality of initial documents, wherein a document content of each candidate document is associated with a document content of the reference document, based on preset knowledge system data; and
a recommendation module (1030) configured to recommend a target document in the at least one candidate document to the user, the target document including a document that the user is currently interested in, and a document that the user is interested in after a preset time period.

11. An electronic device (1100), comprising:
at least one processor (1101); and
a memory (1108) communicatively connected with the at least one processor (1101),
wherein the memory (1108) stores instructions executable by the at least one processor (1101), and the instructions, when executed by the at least one processor (1101), cause the at least one processor (1101) to implement the method of any one of claims 1 to 9.

12. A non-transitory computer-readable storage medium having computer instructions stored thereon, wherein the computer instructions are configured to cause a computer to implement the method according to any one of claims 1 to 9.

13. A computer program product comprising a computer program, the computer program, when executed by a processor, implementing the method according to any one of claims 1 to 9.
